(19) **Europäisches Patentamt**
**European Patent Office**
**Office européen des brevets**

(11) **EP 0 878 064 B1**

(12) **EUROPÄISCHE PATENTSCHRIFT**

(45) Veröffentlichungstag und Bekanntmachung des Hinweises auf die Patenterteilung:
**03.05.2000   Patentblatt 2000/18**

(21) Anmeldenummer: **97915269.1**

(22) Anmeldetag: **30.01.1997**

(51) Int Cl.⁷: $H04B\ 7/216$

(86) Internationale Anmeldenummer:
**PCT/DE97/00179**

(87) Internationale Veröffentlichungsnummer:
**WO 97/28617 (07.08.1997 Gazette 1997/34)**

(54) **CODEMODULIERTES ÜBERTRAGUNGSVERFAHREN UND NACH DIESEM ÜBERTRAGUNGSVERFAHREN ARBEITENDES ÜBERTRAGUNGSSYSTEM**

CODE-MODULATED TRANSMISSION PROCESS AND TRANSMISSION SYSTEM OPERATING ACCORDING THERETO

PROCEDE DE TRANSMISSION A MODULATION DE CODE ET SYSTEME DE TRANSMISSION FONCTIONNANT D'APRES CE PROCEDE

(84) Benannte Vertragsstaaten:
**AT BE CH DE ES FI FR GB LI NL PT SE**

(30) Priorität: **31.01.1996  DE 19603443**

(43) Veröffentlichungstag der Anmeldung:
**18.11.1998   Patentblatt 1998/47**

(73) Patentinhaber: **SIEMENS AKTIENGESELLSCHAFT**
**80333 München (DE)**

(72) Erfinder:
• **ZHANG, Zhongping**
  **D-81379 München (DE)**
• **SEIFERT, Franz**
  **A-1170 Wien (AT)**
• **WEIGEL, Robert**
  **D-80333 München (DE)**

(56) Entgegenhaltungen:
**EP-A- 0 430 587       EP-A- 0 586 090**
**EP-A- 0 600 713       US-A- 5 373 502**

• **PROCEEDINGS OF 1995 IEEE MTT-S DIGEST INTERNATIONAL MICROWAVE SYMPOSIUM DIGEST. , Mai 1995, ORLANDO, USA, Seiten 899-902, XP000536998 Z. ZHANG, F. SEIFERT UND R. WEIGEL: "ASAW Matched Filter Based Spread Spectrum Technique for Indoor Multiple Access Systems" in der Anmeldung erwähnt**
• **PROCEEDINGS OF 1995 IEEE MTT-S DIGEST INTERNATIONAL MICROWAVE SYMPOSIUM DIGEST. , Mai 1995, ORLANDO, USA, Seiten 899-902, XP000536998 Z. ZHANG, F. SEIFERT UND R. WEIGEL: "ASAW Matched Filter Based Spread Spectrum Technique for Indoor Multiple Access Systems"**

**Beschreibung**

Die Erfindung betrifft ein codemoduliertes Übertragungsverfahren und ein nach diesem Übertragungsverfahren arbeitendes Übertragungssystem gemäß Oberbegriff des Patentanspruches 1 bzw. des Patentanspruches 7. Ein derartiges Übertragungsverfahren und Übertragungssystem sind bereits aus der deutschen Offenlegungsschrift DE 4 333 396 A1 bekannt.

Ein nach dem codemodulierten Übertragungsverfahren (CDMA) ("Code Division Multiple Access") arbeitendes Übertragungssystem stellt ein Nachrichtensystem dar, bei welchem ein Funkfeld gemeinsames von einer Anzahl von Teilnehmern benutzt wird. Das Nachrichtensystem besteht aus festen oder mobilen Teilnehmerstationen, die mit einer Basisstation in Verbindung stehen. Die Teilnehmer können dabei untereinander über die Basisstation kommunizieren. Hierfür sind Übertragungskanäle vorgesehen, die bei dem CDMA-Verfahren, wie bereits in DE 4 333 396 A1 beschrieben, durch eine kanalindividuelle Codierung der in diesen Nachrichtenkanälen jeweils zu übertragenden Nutzinformationen voneinander unterscheidbar sind. Die kanalindividuelle Codierung erfolgt dabei beispielsweise bei einer Übertragung von der Basisstation zu den Teilnehmerstationen hin (im folgenden auch als "Downlink"-Übertragung bezeichnet) sendeseitig in der Weise, daß jedes in einem bestimmten Übertragungskanal zu übertragende Nutzinformationsbit selbst in eine festgelegte Anzahl von als Chips bezeichnete Bits ("Unterbits") unterteilt wird. Die durch diese Anzahl von Chips gebildete Chipfolge stellt dabei eine für den jeweiligen Übertragungskanal charakteristische Chipfolge dar. Mit den auf diese Weise für die einzelnen Übertragungskanäle gebildeten Codes wird anschließend ein Hochfrequenz-Trägersignal moduliert, so daß in diesem modulierten Trägersignal die einzelnen Codes überlagert sind.

Empfangsseitig, d.h. bei dem angenommenen Beispiel in den einzelnen Teilnehmerstationen, wird aus dem empfangenen Hochfrequenz-Trägersignal durch Demodulation und Filterung zunächst der für die jeweilige Teilnehmerstation in Frage kommende Übertragungskanal und damit Code selektiert und daraus schließlich die darin übertragene Nutzinformation rückgewonnen.

Die Bandbreite der zu übertragenden Nutzinformationen wird bei dem CDMA-Verfahren durch deren zuvor beschriebene Codierung stark verbreitert. Man spricht hierbei auch von einem "Spread Spectrum"-Übertragungsverfahren. Für die Übertragung der Nutzinformationen wird dabei das gesamte zur Verfügung stehende Frequenzband ausgenutzt.

Bei einem modifizierten CDMA-Verfahren, nämlich dem TCDMA-Verfahren, welches eine Kombination aus dem CDMA-Verfahren und dem bekannten TDMA-Verfahren ("Time Division Multiple Access") darstellt, wird für jeden Code und damit Übertragungskanal eine festgelegte Anzahl von Zeitkanälen festgelegt, so daß im Zeitmultiplex-Betrieb jeder Code von einer Mehrzahl von Teilnehmern benutzt werden kann.

In EP-A-430587 ist ein nach einem codemodulierten Übertragungsverfahren arbeitendes Übertragungssystem offengelegt, bei dem die Übertragungskanäle durch mehrere durch Codes modulierte Hochfrequenz-Trägerschwingungen repräsentiert sind und die Phasen der durch Codes modulierten Hochfrequenz-Trägerschwingungen synchron sind.

Es ist nun Aufgabe der vorliegenden Erfindung, einen Weg zu zeigen, wie ein codemoduliertes Übertragungsverfahren bzw. Übertragungssystem gemäß Oberbegriff des Patentanspruches 1 bzw. Patentanspruch 7 ausgebildet werden kann, um festgelegte Übertragungskanäle mit bestimmten Codes gegenüber den übrigen Codes/Übertragungskanälen empfangsseitig mit einer höheren Sicherheit detektieren zu können.

Gelöst wird diese Aufgabe bei einem codemodulierten Übertragungsverfahren gemäß Oberbegriff des Patentanspruches 1 durch die in diesem Patentanspruch angegebenen Verfahrensmerkmale.

Die Erfindung bringt dabei den Vorteil mit sich, daß der jeweilige priorisierte Code und damit Übertragungskanal mit einem relativ geringen zusätzlichen Steuerungsaufwand gegenüber den übrigen Codes in einer Teilnehmerstation detektiert werden kann.

Zweckmäßige Ausgestaltungen des Verfahrens gemäß der vorliegenden Erfindung sowie ein nach diesem Verfahren arbeitendes Übertragungssystem ergeben sich aus den Patentansprüchen 2 bis 7.

Im folgenden wird nun die vorliegende Erfindung anhand von Zeichnungen beispielsweise näher erläutert.

FIG 1 zeigt ein Diagramm für eine allgemeine Erläuterung des synchronen CDMA-Verfahrens,
FIG 2 zeigt ein Diagramm für die Erläuterung der bei dem TCDMA-Verfahren für die einzelnen Codes festgelegten Zeitschlitze,
FIG 3 zeigt in schematischer Form einen möglichen Aufbau einer Basisstation und
FIG 4 zeigt in schematischer Form einen möglichen Aufbau einer Teilnehmerstation.

Die vorliegende Erfindung wird nachfolgend am Beispiel des TCDMA-Verfahrens erläutert. Es sei hier aber bereits darauf hingewiesen, daß die vorliegende Erfindung nicht auf ein derartiges TCDMA-Verfahren beschränkt ist, sondern auch bei dem zuvor erwähnten CDMA-Verfahren anwendbar ist.

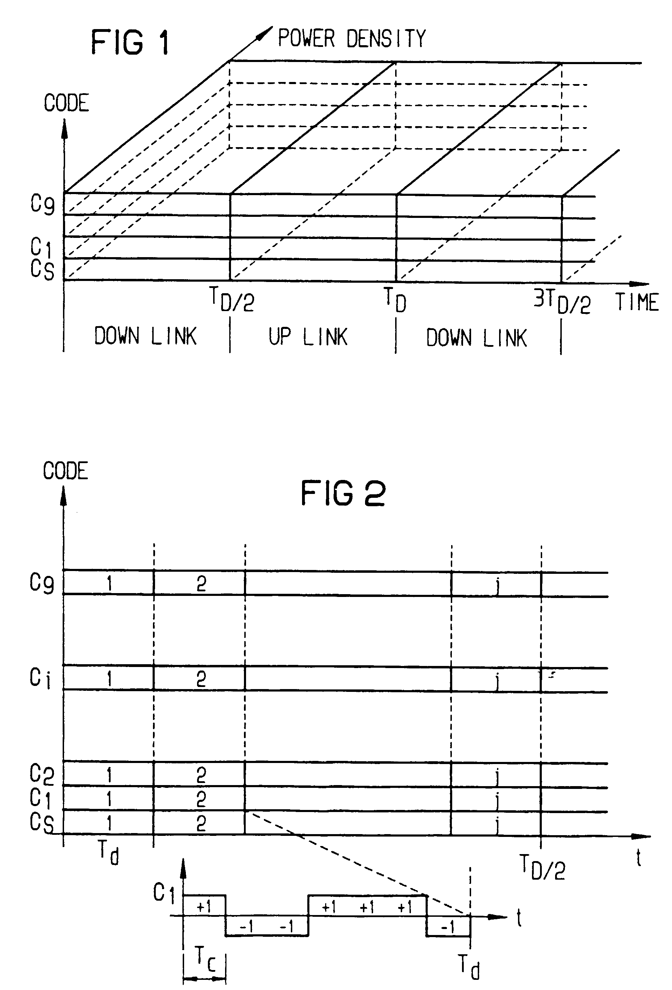

In FIG 1 ist nochmals das Prinzip des synchronen CDMA-Verfahrens in schematischer Form dargestellt.

Danach wird die Funkstrecke zwischen einer Basisstation und den Teilnehmerstationen im Zeitmultiplex abwechselnd für die Übertragung von der Basisstation zu den Teilnehmerstationen und für die Übertragung von den Teilnehmerstationen zu der Basisstation benutzt. Die zuerst genannte Übertragungsrichtung ist dabei in FIG 1 als "Downlink", die zuletzt genannte Übertragungsrichtung dagegen als "Uplink" bezeichnet. In einem in FIG 1 dargestellten Zeitintervall 0 bis $T_D$ ist dabei beispielsweise ein Teilintervall 0 bis $T_D/2$ für "Downlink" reserviert. Das verbleibende Teilintervall $T_D/2$ bis $T_D$ steht dagegen für "Uplink" zur Vefügung.

Wie bereits eingangs erwähnt, erfolgt die Übertragung von Nutzinformationen in Übertragungskanälen, welche bei dem CDMA-Verfahren durch Codes definiert sind. Mit diesen Codes, die selbst mit den zu übertragenden Nutzinformationen moduliert werden, erfolgt eine Modulation eines Hochfrequenz-Trägersignals, das über eine Antenne abgestrahlt wird. Diese Codes sind in FIG 1 mit $C_S$, $C_1$, $C_2$, ..., $C_q$ bezeichnet. Dabei repräsentiert der Code $C_S$ einen Übertragungskanal, in welchem zumindest Synchronisierinformationen in Form eines festgelegten Synchronisiermusters übertragen werden. Die übrigen Codes werden benutzt, um Nutzdaten zu übertragen. Dabei sei darauf hingewiesen, daß unter Nutzdaten jegliche Art von digitalen Signalen zu verstehen ist. Unter diese fallen beispielsweise Text- und Datensignale, Sprachsignale in digitaler Form, digitale Videosignale usw..

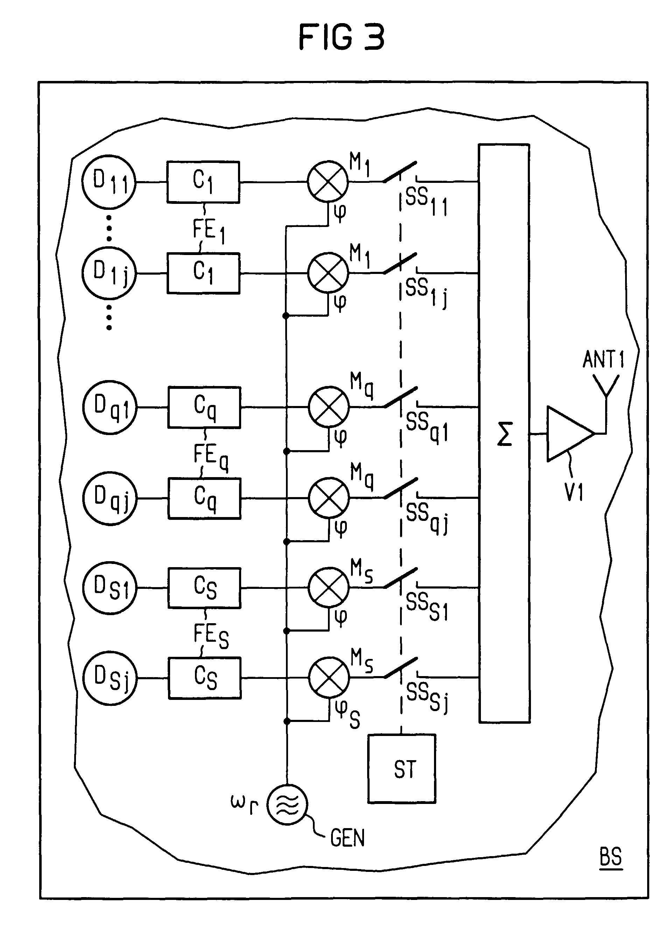

In FIG 2 ist der Fall dargestellt, daß nach dem eingangs bereits erwähnten TCDMA-Verfahren für jeden der in FIG 1 schematisch angegebenen Codes eine festgelegte Anzahl von Zeitkanälen definiert ist. Diesen Zeitkanälen ist in aufeinanderfolgenden Pulsrahmen jeweils ein Zeitschlitz zugeordnet. Ein solcher Pulsrahmen ist in FIG 3 dargestellt und weist beispielsweise mit 1 bis j bezeichnete Zeitschlitze auf, die Zeitkanälen 1 bis j individuell zugeordnet sind. Die zeitliche Länge $T_d$ eines solchen Zeitschlitzes entspricht dabei beispielsweise der Länge eines zu übertragenden Nutzbits bzw. Synchronisierbits.

In FIG 2 ist weiterhin am Beispiel des Codes $C_1$ dargestellt, daß der jeweilige Code aus einer diesen charakterisierenden Chipfolge (Bitfolge) mit einer festgelegten Anzahl von Chips gebildet ist, deren Länge jeweils $T_C$ beträgt und deren logischer Pegel beispielsweise +1 oder -1 sein kann. Die Länge der Chipfolge, z.B. 7 Chips, entspricht dabei der Länge eines Zeitschlitzes $T_d$ und damit eines zu übertragenden Bits.

Für die "Uplink"-Übertragungsrichtung ($T_D/2$ bis $T_D$) gilt ebenfalls die erläuterte Zeitschlitzeinteilung.

Nachdem zuvor anhand der FIGUREN 1 und 2 das TCDMA-Verfahren in allgemeiner Form beschrieben wurde, wird nachfolgend auf einen möglichen Aufbau und die Wirkungsweise einer Basisstation und der mit dieser in Funkverbindung stehenden Teilnehmerstationen für eine "Downlink"-Übetragung näher eingegangen.

Es wird dabei zunächst anhand der FIG 3 die Basisstation betrachtet, wobei von dieser lediglich die für das Verständnis der vorliegenden Erfindung erforderlichen Schaltungselemente dargestellt sind.

Für die nachfolgende Erläuterungen sei angenommen, daß von der Basisstation BS aus einerseits Nutzdaten über eine Mehrzahl von Übertragungskanälen i (i=1,...,q) mit den Codes $C_i$ (i=1,...,q) und andererseits in einem gesonderten Übertragungskanal S mit dem Code $C_S$ eine festgelegte Synchronisierinformation zu allen Teilnehmerstationen beispielsweise in Form von Mobilstationen hin kontinuierlich zu übertragen sind, und zwar nach dem TCDMA-Verfahren. Da nach diesem TCDMA-Verfahren, wie bereits zuvor erwähnt, für jeden Code eine festgelegte Anzahl von Zeitkanälen (j) vorgesehen ist, werden die einzelnen Codes jeweils für eine Übertragung zu einer Mehrzahl von Teilnehmerstationen benutzt. Für die Nutzdaten und die Synchronisierinformation, die beispielsweise binäre Informationen mit den logischen Pegeln "1" und "0" darstellen mögen, ist jeweils eine gesonderte Datenquelle schematisch angedeutet, die die Nutzdaten bzw. die Synchronisierinformation bitweise bereitstellen. Diese Datenquellen sind in FIG 3 entsprechend ihrer Zuordnung zu den Übertragungskanälen 1 bis q, S und den für diese jeweils festgelegten Zeitkanälen (j) mit D11,...,D1j;...; Dq1,..., Dqj;Ds1,...,Dsj bezeichnet. Jeder dieser Datenquellen ist ein gesonderter Modulationszweig nachgeschaltet, der einem der Übertragungskanäle 1 bis q und S und einem der in diesen jeweils festgelegten Zeitkanälen zugeordnet ist. In dem jeweiligen Modulationszweig wird dabei zunächst der durch eine Funktionseinheit (FE1,..., FEq, FEs) bereitgestellte, für den jeweiligen Übertragungskanal in Frage kommende Code ($C_1$, ..., $C_q$, $C_S$) mit dem gerade bereitgestellten Nutzdaten-bzw.Synchronisierbit moduliert. Es wird dafür das OOK-Modulationsverfahren ("ON-OFF-Keying) angewandt, d.h. daß beispielsweise bei Auftreten eines zu übertragenden logischen Pegels "1" der jeweilige Code abgegeben, der Code bei Auftreten eines logischen Pegels "0" dagegen unterdrückt wird.

Anschließend wird der jeweilige modulierte Code einem in dem jeweiligen Modulationszweig liegenden Modulator ($M_1$,...,$M_q$ bzw. $M_S$) zugeführt, um mit diesem Code eine Hochfrequenz-Trägerschwingung, deren Kreisfrequenz $\omega_r = 2\pi f_r$ beträgt und von einem Hochfrequenz-Generator GEN bereitgestellt wird, zu modulieren. Angewandt wird hierfür die sogenannte binäre Phasenmodulation BPSK ("Binary Phase Shift Keying"). Die Modulatoren sind dabei bei dem vorliegenden Ausführungsbeispiel derart ausgebildet, daß die Phase zumindest einer der durch einen Code modulierten Hochfrequenz-Trägerschwingungen gegenüber der Phase der übrigen durch Codes modulierten Hochfrequenz-Trägerschwingungen um einen festgelegten Betrag verschoben ist. Die Phasenverschiebung beträgt hier beispielsweise 90°,.wobei die Phasen der genannten übrigen Hochfrequenz-Trägerschwingungen zumindest annähernd gleich sind. Hierfür weisen die Modulatoren beispielsweise entsprechende Phasenschieber bzw. Verzögerungsglieder auf. Bei dem vorliegenden Ausführungsbeispiel weist die mit dem Code $C_S$ modulierte Hochfrequenz-Trägerschwingung die Phasenverschiebung auf, so daß der durch diesen Code repräsentierte Übertragungskanal gegenüber den übrigen Übertragungskanälen hervorgehoben bzw. priorisiert ist, um die Synchronisation, die normalerweise in CDMA-Systemen als schwierig angeshen wird, zu erleichtern.

Darüber hinaus ist bei dem vorliegenden Ausführungsbeispiel vorgesehen, daß der priorisierte Code (hier $C_S$) gegenüber den übrigen Codes mit einer höheren Energie abgegeben wird, beispielsweise mit einer um 1dB höheren Energie.

Im übrigen kann auch alternativ oder zusätzlich zumindest ein weiterer Code in der angegebenen Weise priorisiert werden, um dessen Detektionssicherheit gegenüber den anderen Codes zu erhöhen. Als Beispiel sei hier ein Code genannt, der einen Übertragungskanal repräsentiert, welcher z.B. als Notruf-Übertragungskanal benutzt ist.

Die auf diese Weise in den einzelnen Modulationszweigen entstehenden modulierten Hochfrequenz-Trägersignale werden anschließend jeweils einem dem jeweiligen Modulationszweig zugehörigen Zeitschlitz-Schalter zugeführt, welcher derart von einer Steuereinrichtung ST her gesteuert wird, daß das modulierte Hochfrequenz-Trägersignal entsprechend dem TCDMA-Verfahren zeitschlitzgerecht einer mit den Ausgängen der Zeitschlitz-Schalter verbundenen Summiereinrichtung $\Sigma$ zugeführt wird. Die Zeitschlitz-Schalter sind in FIG 3 entsprechend ihrer Zuordnung zu den einzelnen Modulationszweigen mit $SS_{11}$,..., $SS_{1j}$; $SS_{q1}$,..., $SS_{qj}$;$SS_{S1}$, ..., $SS_{Sj}$ bezeichnet.

Durch die genannte Summiereinrichtung $\Sigma$ werden die einzelnen modulierten Hochfrequenz-Trägersignale, die von der Frequenz her gleich sind, überlagert. Das aus dieser Überlagerung resultierende Hochfrequenz-Trägersignale wird dann nach einer Verstärkung durch einen Verstärker V1 über eine Antenne ANT1 abgestrahlt.

Im übrigen sei noch bezüglich der Verwendung der Codes und der Zeitkanäle darauf hingewiesen, daß für diese keine feste Zuordnung zu bestimmten Teilnehmerstationen vorgesehen ist. Vielmehr erfolgt die Zuteilung der Codes und Zeitschlitze zu den einzelnen Teilnehmerstationen durch die Basisstation BS. Hierfür kann in dieser beispielsweise eine Tabelle geführt sein, aus welcher die bereits aktiven bzw. noch freien Codes und Zeitkanäle hervorgehen. Nach Maßgabe der in dieser Tabelle enthaltenen Informationen wählt die Basisstation BS für die Verbindungen zu den einzelnen Teilnehmerstationen die zu benutzenden Codes und Zeitschlitze aus und teilt diese den Teilnehmerstationen beispielsweise durch in festgelegten Zeitkanälen des Synchronisierkanals ($C_S$) übertragene Informationen mit. Für diese Auswahl können dabei beispielsweise zunächst die Zeitkanäle eines Codes möglichst gleichmäßig belegt werden, ehe ein weiterer Code ausgewählt wird, wobei die Auswahl der Zeitkanäle und Codes derart erfolgt, daß Interferenzen zwischen in demselben Zeitkanal zu übertragenden Informationen vermieden werden. Auf die Auswahl der Codes und Zeitkanäle wird im folgenden nicht näher eingegangen, da dies nicht Gegenstand der vorliegenden Erfindung ist.

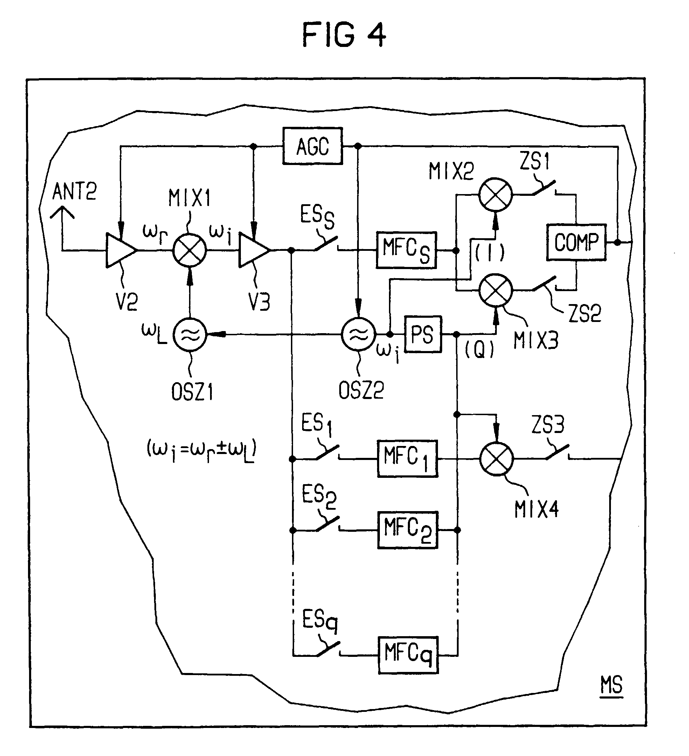

Die über die Antenne ANT1 abgestrahlte modulierte Hochfrequenz-Trägerschwingung wird durch die einzelnen mit der Basisstation BS verbundenen Teilnehmerstationen empfangen. Auf die Empfangsvorgänge wird im folgenden näher eingegangen. Hierzu wird von einem möglichen Aufbau der Teilnehmerstationen ausgegangen, wie er in FIG 4 dargestellt ist. Hierbei sind nur die Schaltungselemente angegeben, die für das Verständnis der vorliegenden Erfindung erforderlich sind.

Nach FIG 4 gelangt das von einer mit MS bezeichneten Teilnehmereinrichtung empfangene modulierte Hochfrequenz-Trägersignal über eine Antenne ANT2 zu einem Verstärker V2, der zur Beherrschung eines großen Dynamikbereiches der Empfangs feldstärke (nah-fern) geregelt ist(AGC, "Automatic Gain Control"). Das verstärkte Trägersignal ($\omega_r$) wird in einer ersten Mischstufe MIX1 mit einem von einem Oszillator OSZ1 bereitgestellten Oszillatorsignal der Frequenz $\omega_L$ so gemischt, daß ein Signal mit einer Zwischenfrequenz $\omega_i$ mit $\omega_i=\omega_r\pm\omega_L$ entsteht. Nach Verstärkung durch einen ebenfalls geregelten Zwischenfrequenzverstärker V3 wird das Zwischenfrequenz-Signal einerseits einem Zeitschlitz-Schalter $ES_S$ und andererseits Zeitsschlitz-Schaltern $ES_1$ bis $ES_q$ zugeführt. Diese Schalter bilden jeweils den Eingang eines gesonderten Filterzweiges für die Filterung der zuvor genannten Codes $C_S$ und $C_1$ bis $C_q$ für die Synchronisierinformation und Nutzdaten. Dabei wird bei dem vorliegenden Ausführungsbeispiel davon ausgegangen, daß die jeweilige Teilnehmerstation MS für den Empfang sämtlicher Codes ausgelegt ist. Alternativ dazu kann jedoch die jeweilige Teilnehmerstation auch lediglich für den Empfang einer oder eines Teiles der Codes $C_1$ bis $C_q$ und des Codes $C_S$ ausgelegt sein. In diesem Fall wären dann lediglich die in Frage kommenden Schalter und damit Filterzweige vorgesehen.

Der Zeitschlitz-Schalter $ES_S$ ist während des oben erwähnten, in FIG 1 dargestellten Zeitintervalls für die "Downlink"-Übertragung ($T_D/2$ -$T_D$) zu jedem Zeitschlitz geschlossen. Von den Zeitschlitz-Schaltern $ES_1$ bis $ES_q$ ist dagegen lediglich derjenige geschlossen, der dem der Teilnehmerstation MS von der Basisstation BS (FIG 3) her zugeteiltem Code und Zeitschlitz entspricht.

Den Zeitschlitz-Schaltern $ES_S$ und $ES_1$ bis $Es_q$ ist jeweils ein signalangepaßtes Filter nachgeschaltet, welches auf einen der Codes $C_S$ und $C_1$ bis $C_q$ abgestimmt ist. Diese Filter, die in FIG 4 entsprechend der Zuordnung zu den einzelnen Schaltern und damit Filterzweigen mit $MFC_S$, $MFC_1$,..., $MFC_q$ bezeichnet sind, können beispielsweise als sogenannte "Matched Filter"-Anordnungen ausgebildet sein, wie sie in der eingangs erwähnten deutschen Offenlegungsschrift DE 4 333 396 A1 oder in "A SAW Matched Filter Based Spread Spectrum Technique Based for Indoor Multiple Access Systems", Z. Zhang, F. Seifert, R. Weigel, Proceedings 1995 IEEE MTT-S Symposium, Orlando, Mai 1995, Seiten 899 bis 902 beschrieben sind.

Der Ausgang des Filters $MFC_S$, dem bei geschlossenem Zeitschlitz-Schalter $ES_S$ ein Zwischenfrequenzsignal mit der Zwischenfrequenz $\omega_i$ zugeführt ist, liefert während des Auftretens eines Synchronisierbits und damit des Codes $C_S$ ein Ausgangssignal in Form eines komprimierten Ausgangsimpulses. Dieses Ausgangssignal wird zwei Mischern MIX2 und MIX3 zugeführt. Zusätzlich ist der Mischer MIX2 (I-Zweig) von einem Oszillator OSZ2 her mit einem Schwingungssignal der Zwischenfrequenz $\omega_i$ beaufschlagt. Der Mischer MIX3 (Q-Zweig) erhält dagegen ein Schwingungssignal der gleichen Zwischenfrequenz zugeführt, dessen Phase jedoch um $\pi/2$ verschoben ist. Hierzu ist bei dem vorliegenden Ausführungsbeispiel zwischen Oszillator OSZ2 und dem Mischer MIX3 ein mit PS bezeichneter Phasenschieber geschaltet. Ausgangsseitig sind die beiden Mischer MIX2 und MIX3 jeweils über einen Zeitfenster-Schalter an einen Komparator COMP angeschlossen. Dabei ist der dem Mischer MIX2 zugeordnete Zeitfenster-Schalter mit ZS1, der dem Mischer MIX3 zugeordnete Zeitfenster-Schalter degegen mit ZS2 bezeichnet. Die beiden Zeitfenster-Schalter werden dabei gemeinsam gesteuert. Nach dem Komparator COMP findet dann eine kohärente Detektion der Synchronisiersignale statt.

Der Komparator COMP ist außerdem mit seinem Ausgang einerseits an einen Steuereingang des Oszillators OSZ2 für dessen Frequenz- und Phasenregelung und andererseits an einen Steuereingang einer Einrichtung AGC zur Verstärkungsregelung der zuvor genannten Verstärker V2 und V3 angeschlossen.

Die dem Filter $MFC_S$ nachgeschalteten, gerade beschrieben Schaltungselemente MIX2, MIX3 und COMP stellen eine sogenannte "Costas-Loop"-Schaltung dar. Mit deren Hilfe wird das am Ausgang dieses Filters auftretende Ausgangssignal durch Mischung in der Phasenlage 0 (I-Zweig) und $\pi/2$ (Q-Zweig) in das Basisband umgesetzt und das in Frage kommende Synchronisierbit gewonnen, und zwar beispielsweise durch eine (adaptive) Schwellwertentscheidung. Entspricht dabei die Phasenlage des im I-Zweig auftretenden Ausgangssignals der Phasenlage, mit der das mit dem Code $C_S$ modulierte Hochfrequenz-Trägersignal von der Basisstation BS (FIG 3) abgestrahlt und in der Teilnehmerstation MS empfangen wird, so wird von dem Komparator COMP der "Costas-loop"-Schaltung her die Frequenz $\omega_i$ und die Phase des von dem Oszillator OSZ2 abgegebenen Schwingungssignal so geregelt (AFC, "Automatic Frequency Control"), daß im I-Zweig des Filters $MFC_S$ während eines Zeitfensters $F_S$ ein Maximum des zuvor erwähnten Ausgangsimpulses dieses Filters (bzw. ein Maximum der Signalenergie) entsteht, im Q-Zweig des Filters $MFC_S$ dagegen ein Minimum des Ausgangsimpulses auftritt. Das Zeitfenster $F_S$, welches durch die Schließzeit der Zeitfenster-Schalter ZS1 und ZS2 festgelegt ist, bleibt dabei zunächst vor einer Synchronisation solange geöffnet, bis in der Teilnehmerstation MS durch Beobachtung der Signalspitzen im I-Zweig und Q-Zweig des Filters $MFC_S$ der Synchrontakt $T_p$ und die Periode der Zeitschlitze ($T_d$ in FIG 2) gefunden worden sind. Erst nach der Synchronisation treten die Zeitfenster-Schalter ZS1 und ZS2 durch eine Verkürzung des Zeitfensters auf die Größe $F_S$ in ihre fehlervermindernde Funktion ein. Die Größe $F_S$ ist dabei so festgelegt, daß Interferenzstörungen durch verschiedene aktive Codes in demselben Zeitschlitz vermieden werden.

Die übrigen, oben erwähnten Filter $MFC_1$ bis $MFC_q$ sind mit ihren Ausgängen gemeinsam an einen Mischer MIX4 angeschlossen. Da von den diesen Filtern zugehörigen Zeitschlitz-Schaltern $ES_1$ bis ESq jeweils nur einer geschlossen ist, wird der am Ausgang des mit dem gerade geschlossenen Zeitschlitz-Schalter verbundenen Filters auftretende Ausgangsimpuls dem Mischer MIX4 zugeführt. Außerdem ist dieser mit dem für den oben erwähnten Q-Zweig des Filters $MFC_S$ bereitgestellten Schwingungssignal des Oszillators OSZ2 mit der Frequenz $\omega_i$ beaufschlagt, welches gegenüber dem Schwingungssignal für den I-Zweig des Filters $MFC_S$ um $90°$, d.h. um $\pi/2$, in der Phase verschoben ist. Durch die erfolgende kohärente Detektion der Codes $C_1$ bis $C_q$ mit der Q-Phasenlage des Schwingungssignals $\omega_i$ entsteht im frequenz- und phasengeregelten Zustand der Teilnehmerstation MS bei geschlossenem Zeitschlitz-Schalter (ES1 bis ESq) am Ausgang des Mischers MIX4 ein Maximum für den gerade auftretenden Datenimpuls. Um auch hier eine Störung durch verschiedene aktive Codes in demselben Zeitschlitz übertragene Signale zu vermeiden, ist dem Mischer MIX4 ein Zeitfenster-Schalter ZS3 nachgeschaltet, durch dessen Schließzustand ein Zeitfenster $F_x$ innerhalb des jeweiligen Zeitschlitzes festgelegt ist. Nach diesem Zeitfenster-Schalter wird dann durch eine (adaptive) Schwellenentscheidung das in Frage kommende Datenbit abgeleitet.

Zur Bestimmung der Parameter der Zeitfensterbreite $l_{w1}$ und $l_{w2}$, welche jeweils den Anfangswert ($l_{w1}$) und den Endwert ($l_{w2}$) der Zeitfenster $F_S$ und $F_x$ ($F_S = l_{w2} - l_{w1}$; $F_S = l_{w2} - l_{w1}$) innerhalb eines Zeitschlitzes $T_d$ darstellen, wird die Funkkanalimpulsantwort an der Luftschnittstelle zwischen Basisstation BS und den Teilnehmersttionen MS an dem jeweiligen Filter $MFC_S$, $MFC_1$,..., $MFC_q$ berücksichtigt. Die Kanalimpulsantwort ist gegeben durch

$$h(t) = \sum_{k=1}^{K} a_k \, \delta(t - t_k) \cdot e^{j\theta_k}$$

wo K die Pfadnummer der Mehrwegeausbreitung des Funksignals, d.h. die Anzahl der unterschiedlichen Übertragungswege durch Reflexionen (Echos) angibt. Die übrigen Parameter $\{a_k\}$, $\{t_k\}$ und $\{\theta_k\}$ stellen die Amplitudendämp-

fung, die relative Laufzeit und die entsprechende Phasenänderung dar. Durch diese Kanalimpulsantwort wird damit also berücksichtigt, daß durch die einzelnen Reflexionen neben einem Hauptmaximum zusätzlich Nebenmaxima auftreten.

Die Zeitfenstergrößen $l_{w1}$ und $l_{w2}$ sind definiert durch:

$$l_{w1} = \lfloor \max\{\tau_{diff}\}\rfloor \quad und \quad l_{w2} = \lfloor \max\{\tau_{rms}\}\rfloor \, ,$$

wobei $\lfloor x \rfloor$ der Integer-Teil von x ist. Der Parameter $\tau_{diff}$ repräsentiert dabei die Differenz der Zeitverzögerungen der Teilnehmerstationen MS aufgrund der Positionsstreuung in Bezug auf die Basisstaion BS (FIG 3). Für eine "Downlink"-Übertragung gilt $l_{w1}=0$, da die Signale ohne Laufzeitunterschiede in der jeweiligen Teilnehmerstaion MS eintreffen. In der "Uplink"-Übertragungsrichtung ist bei mehreren aktiven Teilnehmerstationen in demselben Zeitschlitz $l_{w1}$ normalerweise aufgrund der unterschiedlichen Positionen ungleich "0".

Der Parameter $\tau_{rms}$ stellt den sogenannten "random mean square delay spread" dar und ergibt sich zu:

$$\tau_{rms} = \sqrt{\frac{\sum_{k=1}^{K}(t_k - \tau_m)^2 a_k^2}{\sum_{k=1}^{K} a_k^2}} \quad mit \quad \tau_m = \frac{\sum_{k=1}^{K} t_k a_k^2}{\sum_{k=1}^{K} a_k^2} \, .$$

Dadurch werden nicht nur die Laufzeitverzögerungen, sondern auch die Ernergieanteile der einzelnen Pfaden beim Bestimmen der Zeitfensterbreite einbezogen. Daher entsteht eine optimale Zusammenfassung der Echosignale für die Datendetektion und zugleich eine maximale Eliminierung der Interferenzen außerhalb der ermttelten Zeitfenster $F_S$ und $F_x$.

Um die Synchronbits mit kleinerer Bitfehlerate empfangen zu können, wird zusätzlich zu der Zeitfensterung am Ausgang des Filters $MFC_S$ noch ein besonderes Verfahren zur Selektion der Spreizcodes ($C_1$ bis $C_q$) verwendet. Die dadurch gefundenen Spreizcodes besitzen sehr gute Kreuzkorrelationseigenschaften zu dem Synchroncode $C_S$, so daß die durch die Datencodes $C_i$ (i=1,...,q) verursachten Vielfachzugriffsinterferenzen in demselben Zeitschlitz miniminiert werden können.

Codes mit absoluten Orthogonalitäten im ganzen Korrelationsbereich, wie z.B. Walsh-Codes, sind nur in sehr begrenzten Anzahl vorhanden und daher für Codemultiplex nicht gut geeignet. Eine Pseudo-Noise-Codefamilie mit relativ kleinen Kreuzkorrelationen sind die Gold-Codes. Die Gold- Codes sind in großer Anzahl vorhanden, wobei allerdings nur bestimmte Codes gute Kreuzkorrelationseigenschaften aufweisen. Die Gold-Codes können mit Hilfe von sogenannten bevorzugten Paaren von m-Sequenzen ("maximal length linear sequences") erzeugt werden.

Aufgrund der Zeitfensterung am Ausgang des Filters $MFC_S$ werden Speizcodes benötigt, die möglichst kleine Kreuzkorrelationswerte innerhalb des Zeitfensters $F_S$ besitzen. Dadurch ergibt sich ein erheblich geringerer Anspruch an die Orthogonalität der Spreizcodes im Vergleich zu der Orthogonalität im ganzen Korrelationsbereich. Daher ist es möglich, zahlreiche geeignete Spreizcodes für eine TCDMA-Anwendung zu finden.

Eine Auswahl der Spreizcodes wird im folgenden erläutert. Die Zeitfensterfunktion sei wie folgt definiert:

$$\underline{\Gamma} = [\Gamma(1) \, \Gamma(2) \, ... \, \Gamma(2L - 1)]$$

$$\Gamma(l) = \begin{cases} 1 & l \in \{L - l_{w1}, L - l_{w1} + 1, \ldots, L, L+1, \ldots, L + l_{w2}\} \\ 0 & else \end{cases} .$$

$L$ ist die Länge der Spreizcodes und $l_{w1}, l_{w2}$ sind jeweils die oben bereits erwähnten Anfang- und Endeindizes des Zeitfensters für die Ausgangsabtastung an dem signalangepaßten Filter $MFC_S$.

Für die Spreizung der Synchronbits können beispielsweise die zuvor bereits erwähnten m-Sequenzen aufgrund ihrer guten Autokorrelationeigenschaften verwendet werden. Die Spreizcodes für die Nutzdaten können aus den zahlreichen Gold-Codes $C_i$, $i = 1,...,N_S$, mit derselben Länge $L$ ausgewählt werden.

Aufgrund der On-Off-Keying-Modulation wird hier zur Selektion der Spreizcodes nur eine aperiodische Korrelationsfunktion berücksichtigt. The aperiodische Korrelation zweier Codes $C_s$ und $C_1^{(n)}$, wobei $C_1^{(n)}$ die um $n$ chips zyklisch verschobene Version von $C_1$ ist, ist definiert gemäß

$$\underline{\psi} = \begin{bmatrix} \psi(1) & \psi(2) & \dots & \psi(2L-1) \end{bmatrix}$$
$$\psi(l) = \sum_{\kappa=1}^{L} C_s(\kappa) C_1^{(n)}(l+\kappa) \quad \text{für} \quad l = 1,\dots,2L-1 \tag{1}$$

Der Fensterwert für $C_1^{(n)}$ ergibt sich aus

$$F_1(n) = \Sigma \underline{\psi} \cdot \underline{\Gamma}$$

Für $C_1$ bekommt man einen Maximumfensterwert aus

$$M_1 = \max\{F_1(n)\} \quad \text{für } n = 1,\dots,L\text{-}1$$

mit enstprechendem Index $n_1$ für M1.

Wird der Vorgang mit jedem $C_i$ aus den Codevorrat $C_i$, $i = 1,\dots,N_s$, wiederholt, so ergibt sich

$$\underline{M} = \begin{bmatrix} M_1 & M_2 & \dots & M_{N_s} \end{bmatrix}, \quad \underline{n} = \begin{bmatrix} n_1 & n_2 & \dots & n_{N_s} \end{bmatrix}.$$

Die verschobenen Versionen der jeweiligen Spreizcodes resultieren aus

$$C_i^{(n_i)}(l) = C_i(l+n_i) \quad \text{für } n_i, l = 1,\dots,L\text{-}1 \text{ und } i = 1,\dots,N_s$$

Wird der Vektor $\underline{M}$ nach aufsteigender Ordnung sortiert

$$\underline{M'} = sort(\underline{M}),$$

so ergibt sich entsprechend $\underline{n}$ ein neuer Indexvektor

$$\underline{n'} = \begin{bmatrix} n'_1 & n'_2 & \dots & n'_{N_s} \end{bmatrix}.$$

Schließlich ergeben sich die gesuchten Codes zu

$$C'_i = C_i^{(n'_i)}.$$

Die nach diesem Verfahren gefundenen Codes $C'_i$ haben in Bezug auf den Synchroncode $C_S$ die Eigenschaft, daß $C'_1$ die kleinste Kreuzkorrelation mit $C_S$, $C'_2$ die zweitkleinste Kreuzkorrelation mit $C_S$ aufweist, usw. Dieses Verfahren kann derart iterativ fortgesetzt werden, daß in der Gleichung (1) der Code $C_S$ durch die Summe von $C_S$ und $C'_1$ und $C_1$ durch $C_2$ ersetzt wird und damit die angegebenen Verfahrensschritte durchgeführt werden. Man erhält dann einen zweiten Code, der die kleinste Kreuzkorrelation gegenüber $C_S$ und $C'_1$ besitzt. Bei der dritten Iteration wird in der Gleichung (1) der Code $C_S$ durch die Summe der beiden bereits gefundenen Codes + $C_S$ und $C_1$ durch $C_3$ ersetzt, um nach Durchführung der angegebenen Verfahrensschritte einen dritten Code zu ermitteln. Dieses Verfahren wird dann in entsprechender Weise mit weiteren Iterationen fortgesetzt, um sämtliche weiteren Codes zu ermitteln.

Das gerade beschriebene Selektionsverfahren kann im übrigen ebenfalls eingesetzt werden, um für eine "uplink"-Übertragung die Datencodes zu ermitteln. Hierbei kann von einem bestimmten Code ausgegangen werden, durch den als ersten Code in Gleichung (1) der Code $C_S$ ersetzt wird.

**Patentansprüche**

1. Codemoduliertes Übertragungsverfahren zum Übertragen von Informationen zwischen einer Basisstation (BS) und einer Mehrzahl von Teilnehmerstationen (MS) in Übertragungskanälen, welche durch unterschiedlich durch Codes ($C_S$, $C_1$, ..., $C_q$) modulierte Hochfrequenz-Trägerschwingungen repräsentiert sind,
**dadurch gekennzeichnet**,
daß zumindest einer der Übertragungskanäle (z.B. $C_S$) als priorisierter Übertragungskanal gegenüber den übrigen Übertragungskanälen ($C_1$, ..., $C_q$) dadurch hervorgehoben wird, daß die Phase der durch den Code des priorisierten Übertragungskanals modulierten Hochfrequenz-Trägerschwingungen gegenüber der Phase der durch die Codes der übrigen Übertragungskanäle modulierten Hochfrequenz-Trägerschwingungen um einen festgelegten Betrag verschoben ist.

2. Codemoduliertes Übertragungsverfahren nach Anspruch 1,
**dadurch gekennzeichnet**,
daß die Phasenverschiebung 90° beträgt.

3. Codemoduliertes Übertragungsverfahren nach Anspruch 1 oder 2,
**dadurch gekennzeichnet,**
daß in dem jeweiligen durch einen Code ($C_S$, $C_1$, ..., $C_q$) repräsentierten Übertragungskanal eine Mehrzahl von Zeitkanälen für eine Zeitmultiplex-Übertragung unterschiedlicher Informationen festgelegt ist.

4. Codemoduliertes Übertragungsverfahren nach einem der Ansprüche 1 bis 3,
**dadurch gekennzeichnet,**
daß als priorisierter Übertragungskanal ein für die Übertragung von Synchronisierinformationen vorgesehener Synchronisierkanal ausgewählt wird.

5. Codemoduliertes Übertragungsverfahren nach einem der Ansprüche 1 bis 4,
**dadurch gekennzeichnet,**
daß der den priorisierten Übertragungskanal repräsentierende Code ($C_S$) gegenüber den die übrigen Übertragungskanäle repräsentierenden Codes ($C_1$, ..., $C_q$) mit einer höheren Energie übertragen wird.

6. Codemoduliertes Übertragungsverfahren nach Anspruch 5,
**dadurch gekennzeichnet,**
daß der Unterschied der Energie des den priorisierten Übertragungskanal repräsentierenden Codes ($C_S$) zu der Energie der die übrigen Übertragungskanäle repräsentierenden Codes ($C_1$, ..., $C_q$) 1 dB beträgt.

7. Nach einem codemodulierten Übertragungsverfahren arbeitendes Übertragungssystem zum Übertragen von Informationen zwischen einer Basisstation (BS) und einer Mehrzahl von Teilnehmerstationen (MS) in Übertragungskanälen, welche durch unterschiedlich durch Codes ($C_S$, $C_1$, ..., $C_q$) modulierte Hochfrequenz-Trägerschwingungen repräsentiert sind,
**dadurch gekennzeichnet,**
daß die Basisstation (BS) derart ausgebildet ist, daß von dieser zumindest einer der Übertragungskanäle ( z.B. $C_S$) als priorisierter Übertragungskanal gegenüber den übrigen übertragungskanälen ($C_1$, ..., $C_q$) dadurch hervorgehoben wird, daß die Phase der durch den Code des priorisierten Übertragungskanals modulierten Hochfrequenz-Trägerschwingungen gegenüber der Phase der durch die Codes der übrigen Übertragunskanäle modulierten Hochfrequenz-Trägerschwingungen um einen festgelegten Betrag verschoben ist, und daß die Teilnehmerstationen (MS) jeweils über Detektionsmittel (MFC$_S$, MIX1, MIX2, COMP; MFC$_1$ ..., MFC$_q$, MIX4) verfügen, welche derart ausgebildet sind, daß durch diese zunächst zumindest ein Teil der Codes ($C_S$, $C_1$, ..., $C_q$) entsprechend der Phasenlage detektiert und anschließend aus dem jeweiligen Code die übertragene Information rückgewonnen wird.

**Claims**

1. Code-modulated transmission method for transmitting information between a base station (BS) and a multiplicity of subscriber stations (MS) in transmission channels which are represented by radio-frequency carrier waves modulated in different ways by means of codes ($C_s$, $C_1$, ..., $C_q$), characterized in that at least one of the transmission channels (for example $C_s$) is emphasized, as a prioritized transmission channel, in comparison with the other transmission channels ($C_1$, ..., $C_q$), in that the phase of the radio-frequency carrier waves which are modulated by means of the code of the prioritized transmission channel is shifted by a fixed amount in comparison with the phase of the radio-frequency carrier waves modulated by means of the codes of the other transmission channels.

2. Code-modulated transmission method according to Claim 1, characterized in that the phase shift equals 90E.

3. Code-modulated transmission method according to Claim 1 or 2, characterized in that, in the respective transmission channel represented by a code ($C_s$, $C_1$, ..., $C_q$), a multiplicity of time slots is fixed for a time division multiplex transmission of different information.

4. Code-modulated transmission method according to one of Claims 1 to 3, characterized in that a synchronization channel which is provided for the transmission of synchronization information is selected as prioritized transmission channel.

5. Code-modulated transmission method according to one of Claims 1 to 4, characterized in that the code ($C_s$) which represents the prioritized transmission channel is transmitted with a higher level of energy in comparison with the codes ($C_1$, ..., $C_q$) which represents the other transmission channels.

6. Code-modulated transmission method according to Claim 5, characterized in that the difference between the energy of the code ($C_s$) which represents the prioritized transmission channel and the energy of the codes ($C_1$, ..., $C_q$) which represent the other transmission channels is 1 dB.

7. Transmission system, operating according to a code-modulated transmission method, for transmitting information between a base station (BS) and a multiplicity of subscriber stations which are represented by radio-frequency carrier waves modulated in different ways by means of codes ($C_s$, $C_1$, ..., $C_q$), characterized in that the base station (BS) is constructed in such a way that at least one of the transmission channels (for example $C_s$) is emphasized, as a prioritized transmission channel, in comparison with the other transmission channels ($C_1$, ..., $C_q$) by the said base station (BS), the phase of the radio-frequency carrier waves which are modulated by means of the code of the prioritized transmission channel is shifted by a fixed amount in comparison with the phase of the radio-frequency carrier waves modulated by means of the codes of the other transmission channels, and in that the subscriber stations (MS) each have detection means (MFC$_s$, MIX1, MIX2, COMP; MFC$_1$, ..., MFC$_q$, MIX4) which are constructed in such a way that they detect initially at least some of the codes (Cs, $C_1$, ..., $C_q$) in accordance with the phase angle, and the information transmitted is then recovered from the respective code.

**Revendications**

1. Procédé de transmission à modulation de code pour la transmission d'informations entre une station de base (BS) et plusieurs stations d'abonnés (MS) dans des canaux de transmission qui sont représentés par des oscillations porteuses haute fréquence modulées différemment par des codes ($C_S$, $C_1$, ..., $C_q$),
   caractérisé par le fait qu'on avantage au moins l'un des canaux de transmission (par exemple $C_S$) comme canal de transmission prioritaire par rapport aux autres canaux de transmission ($C_1$, ..., $C_q$) en décalant d'une valeur fixée la phase des oscillations porteuses haute fréquence modulées par le code du canal de transmission prioritaire par rapport à la phase des oscillations porteuses haute fréquence modulées par les codes des autres canaux de transmission.

2. Procédé de transmission à modulation de code selon la revendication 1,
   caractérisé par le fait que le déphasage vaut 90°.

3. Procédé de transmission à modulation de code selon la revendication 1 ou 2,
   caractérisé par le fait que, dans le canal de transmission respectif représenté par un code ($C_S$, $C_1$, ..., $C_q$), on fixe plusieurs canaux temporels pour une transmission en multiplexage temporel de différentes informations.

**4.** Procédé de transmission à modulation de code selon l'une des revendications 1 à 3,
caractérisé par le fait que, comme canal de transmission prioritaire, on sélectionne un canal de synchronisation prévu pour la transmission d'informations de synchronisation.

**5.** Procédé de transmission à modulation de code selon l'une des revendications 1 à 4,
caractérisé par le fait qu'on transmet avec une plus grande énergie le code ($C_S$) représentant le canal de transmission prioritaire par rapport aux codes ($C_1$, ..., $C_q$) représentant les autres canaux de transmission.

**6.** Procédé de transmission à modulation de code selon la revendication 5,
caractérisé par le fait que la différence de l'énergie du code ($C_S$) représentant le canal de transmission prioritaire à l'énergie des codes ($C_1$, ..., $C_q$) représentant les autres canaux de transmission vaut 1 dB.

**7.** Système de transmission fonctionnant selon un procédé de transmission à modulation de code pour la transmission d'informations entre une station de base (BS) et plusieurs stations d'abonnés (MS) dans des canaux de transmission qui sont représentés par des oscillations porteuses haute fréquence modulées différemment par des codes ($C_S$, $C_1$, ..., $C_q$),
caractérisé par le fait

que la station de base (BS) est conçue de telle sorte que, parmi les canaux de transmission, au moins l'un (par exemple $C_S$) est avantagé comme canal de transmission prioritaire par rapport aux autres canaux de transmission ($C_1$, ..., $C_q$) du fait que la phase des oscillations porteuses haute fréquence modulées par le code du canal de transmission prioritaire est décalée d'une valeur fixée par rapport à la phase des oscillations porteuses haute fréquence modulées par les codes des autres canaux de transmission,
et que les stations d'abonnés (MS) disposent à chaque fois de moyens de détection ($MFC_S$, MIX1, MIX2, COMP ; $MFC_1$, ..., $MFC_q$, MIX4) qui sont conçus de manière à permettre d'abord de détecter au moins une partie des codes ($C_S$, $C_1$, ..., $C_q$) en fonction de la relation de phase et de ensuite récupérer à partir du code respectif l'information transmise.

# FIG 1

POWER DENSITY

CODE

Cg

C1

Cs

$T_{D/2}$  $T_D$  $3T_{D/2}$  TIME

DOWN LINK | UP LINK | DOWN LINK

CODE

# FIG 2

Cg | 1 | 2 | | j |

Ci | 1 | 2 | | j | ʲ

C2 | 1 | 2 | | j |

C1 | 1 | 2 | | j |

Cs | 1 | 2 | | j |

$T_d$ $T_{D/2}$ t

C1

+1

-1 -1

+1 +1 +1

-1

$T_c$ $T_d$ t

# FIG 3

# FIG 4